# EUROPÄISCHE PATENTSCHRIFT

(11) **EP 0 676 643 B1**
(45) Veröffentlichungstag und Bekanntmachung des Hinweises auf die Patenterteilung: **11.06.2003**
(21) Anmeldenummer: 95105182.0
(22) Anmeldetag: 06.04.1995
(51) Int. Cl.: G01N 35/00, B01L 3/14

(54) **System zur kontaminationsfreien Bearbeitung von Reaktionsabläufen**
System for contamination-free reaction processes
Système de réalisation sans contamination des réactions

(30) Priorität: 09.04.1994 DE 4412286
(43) Veröffentlichungstag der Anmeldung: 11.10.1995
(73) Patentinhaber: Roche Diagnostics GmbH, 68298 Mannheim (DE)
(72) Erfinder: Bienhaus, Gerhard, Dr., D-82407 Wielenbach (DE); Lange, Hans, D-68623 Lampertheim (DE)

(56) Entgegenhaltungen:
- EP-A- 0 065 926
- EP-A- 0 076 772
- EP-A- 0 487 492
- EP-A- 0 557 828
- FR-A- 1 407 571
- FR-A- 1 424 765
- FR-A- 1 452 206
- CHEMOMETRICS AND INTELLIGENT LABORATORY SYSTEMS, Bd. 17, Nr. 1, Oktober 1992 AMSTERDAM NL, Seiten 15-45, LINDSEY JS 'A retrospective on the automation of laboratory synthetic chemistry'

## Beschreibung

Gegenstand der Erfindung ist ein System zur automatischen Durchführung von Reaktionen in Reaktionsgefäßen sowie ein Verfahren zur automatischen Durchführung chemischer Reaktionen oder chemischer Analyten, und eine Vorrichtung zur Bearbeitung einer Flussigkeit.

Ein wesentlicher Baustein von Gesundheitssystemen ist der Nachweis von Erkrankungen über die sogenannte medizinische Diagnostik. Dabei werden mit Proben, die eventuell krankheitsbefallenen Personen entnommen wurden, Nachweisreaktionen auf bestimmte Analyten durchgeführt. Als geeignete Analyten haben sich Substrate von Enzymreaktionen, Enzyme selbst, Antigene und in neuerer Zeit auch Nukleinsäuren erwiesen. Dabei ist die Analyse der letztgenannten Substanzen oft deutlich erschwert, da die vorliegenden Konzentrationen manchmal sehr gering sind. Eine Voraussetzung für verläßliche Ergebnisse ist ein verschleppungsfreies Arbeiten, da geringste Konzentrationen von Störsubstanzen einen wesentlichen Einfluß auf das Meßergebnis haben. Insbesondere bei Tests, bei denen mehrere Analysen nacheinander in einem Gerät durchgeführt werden, besteht eine erhebliche Verschleppungsgefahr.

Bei der Nukleinsäurediagnostik wurde durch die Zurverfügungstellung von Amplifikationsverfähren, wie beispielsweise der Polymerase Chain Reaction (US-A-4,683,195) die Nachweisgrenze deutlich reduziert. Dafür steigt jedoch auch die Gefahr der Verfälschung des Meßergebnisses durch Kontaminationen, vor allen Dingen durch Aerosolbildung in der Luft. Aus diesem Grund wurde auch vorgeschlagen, die Vorbereitung von zu analysierenden Proben und die Amplifikation in getrennten Räumen vorzunehmen. Weitere Lösungsansätze sind Überschichten mit Öl oder Wachs sowie die Anwendung eines internen enzymatischen Dekontaminationssystems mit geringerer Sensitivität (US-A-5,035,996). Diese Lösungen sind jedoch aufwendig und für eine automatische Durchführung mehrerer Reaktionen schlecht geeignet.

Bei der Polymerase Chain Reaction werden spezielle Röhrchen verwendet, die durch konische Ausformung einen guten Wärmeübergang von einer untenliegenden Heizung ermöglichen. Darüber hinaus benutzen die meisten zur Durchführung der Thermozyklen verwendeten Geräte eine Deckelheizung (ca. 100 °C) zur Reduzierung der Verdunstung und zur Vermeidung von Kondensatbildung.

Ebenfalls beschrieben sind Platten, die mehrere Reaktionsgefäße enthalten, die über einen manuell aufreißbaren gemeinsamen Deckel verschlossen werden können. Ein Nachteil dieser Ausführung ist, daß bei der Öffnung der Platte Spritzer von einem Reaktionsgefäß in ein benachbartes gelangen können und somit die Verschleppungsgefahr verstärkt ist.

In EP-A-0 408 280 werden auch Reaktionsgefäße im offenen 96 well-Mikrotitrationsplattenformat beschrieben. Die Kontaminationsgefahr ist hier ebenfalls sehr groß.

EP-A-0 557 828 und Lindsey et al. (Chemometrics and Intelligent Laboratory Systems: Laboratory Information Management, Vol. 17 (1992), Seiten 15-45) beschreiben automatisierte Reaktionssysteme. Jedoch findet sich kein Hinweis auf erfindungsgemäße Deckel und Öffnungsmechanismen. Dies gilt ebenfalls für die in EP-A-0 487 492 beschriebene Vorrichtung zur automatischen Entfernung der Verschlüsse von Gefäßen.

FR-A-1 407 571, FR-A-1 424 765, FR-A-1 452 206 und EP-A-0 065 926 beschreiben Verschlüsse, wie sie für Behälter (beispielsweise Flaschen) zur Aufbewahrung von Nahrungsmitteln verwendet werden. Es findet sich kein Hinweis auf erfindungsgemäße Systeme und Verfahren zur automatisierten Durchführung von Reaktionen.

Die in EP-A-0 076 772 beschriebenen Deckel für Zentrifugenbehälter weisen im Gegensatz zu den erfindungsgemäßen Deckeln einen über die Oberseite des Gefäßes hinausragenden Teil auf, mit welchem der Deckel ergriffen werden kann.

Viele der bisher beschriebenen Lösungsansätze für Gefäße zur automatischen Abarbeitung von mehreren Reaktionen haben den Nachteil, daß die Reaktionsgefäße entweder nicht effektiv verschließbar sind, oder daß die Reaktionsgefäße Verschlußkappen haben, die nicht automatengängig sind. Diese Systeme sind daher für eine Routineanwendung mit hohem Durchsatz nur mit erheblichem Kontaminationsrisiko zu gebrauchen.

Gegenstand der Erfindung ist ein System zur automatischen Durchführung von Reaktionen in Reaktionsgefäßen, gemäß Anspruch 1.

In gleicher Weise sind mit der oben genannten Technologie Proben- und Reagenzvorratsgefäße zu bedienen.

Ebenfalls Gegenstand der Erfindung sind ein Verfahren gemäß Anspruch 4 und eine Vorrichtung gemäß Anspruch 6.

Das erfindungsgemäße System ist zur automatischen Durchführung von Reaktionen geeignet. Als automatisch wird in diesem Zusammenhang eine Durchführung bezeichnet, bei der manuelle Arbeitsschritte nach Einführung der Probe in das System bis zum Erhalt des Meßergebnisses vermieden werden. Die Bearbeitungsschritte laufen in vorbestimmter Weise, vorzugsweise getrennt durch ein Computerprogramm, im System ab. Das System ist außerdem zur Durchführung mehrerer aufeinanderfolgender Reaktionen, und sogar in verschiedenen Reagenzvorratsgefäßen, geeignet.

Prinzipiell kann jede Art von chemischen Reaktionen im erfindungsgemäßen System durchgeführt werden. Dazu gehören insbesondere Verfahren, die im Laufe einer Analyse von Bestandteilen einer Probe zu durchlaufen sind. Die vorkommenden Reaktionen richten sich nach der Art des zu bestimmenden Analyten. So werden beispielsweise immunologisch aktive Verbindungen üblicherweise über immunologische Nachweisverfahren bestimmt. Dabei wird die Wechselwirkung zwischen Antigenen und Haptenen einerseits und dagegen gerichteten Antikörpern andererseits genutzt. Im Falle von Nukleinsäurenachweisen wird die relativ spezifische Wechselwirkung zwischen zueinander im wesentlichen komplementären Nukleinsäuren verwendet.

Analyseverfahren für Nukleinsäuren lassen sich im wesentlichen in die Schritte Probenvorbereitung, Nukleinsäurebearbeitung und Nachweis der behandelten Nukleinsäuren einteilen. Das erfindungsgemäße System ist zur Durchführung insbesondere der Nukleinsäurebehandlungsreaktionen ausgelegt. Zu diesen Reaktionen gehört insbesondere die Amplifikation der Nukleinsäuren. Hierfür existieren eine Reihe von Möglichkeiten. Während es isotherm geführte Amplifikationen, wie das in EP-A 0 329 822 beschriebene Verfahren gibt, werden viele andere Amplifikationen unter Durchführung von Temperaturänderungszyklen (Thermozyklen) geführt, wie beispielsweise in der EP-A-0 200 362 beschrieben.

Das erfindungsgemäße System enthält mehrere Reaktionsgefäße, die zur Aufnahme von Reaktionsflüssigkeiten geeignet sind. Das Volumen der Reaktionsflüssigkeiten liegt bevorzugt bei 5 µl bis 5 ml, besonders bevorzugt zwischen 10 µl und 200 µl. Die Reaktionsgefäße sind aus einem gegenüber der Reaktionslösung inerten Material z. B. Kunststoffen wie Polystyrol oder Polypropylen, gefertigt. Sofern die Durchführung von Thermozyklen vorgesehen wird, müssen diese Reaktionsgefäße auch thermostabil sein. Die üblicherweise verwendeten PCR-Tubes von Perkin Elmer sind beispielsweise als Reaktionsgefäße der vorliegenden Erfindung gut geeignet.

Ein wesentliches Merkmal der vorliegenden Erfindung ist die Verwendung von Einzelverschlüssen für diese Reaktionsgefäße. Der Einzelverschluß von Reaktionsgefäßen wurde bisher nicht in Betracht gezogen, möglicherweise dadurch unterstützt, daß die Konstrukteure von Tube-Verbund-Platten auf die Verwendung von Verbunddeckeln als besonders geeignet fixiert waren. Darüber hinaus stellt die Verwendung von Einzelverschlüssen eine technische Herausforderung dar, die durch die erfindungsgemäßen Einzelverschlüsse bewältigt wird. Die Verschlüsse sind, wie die Gefäße, bevorzugt aus einem bevorzugt thermostabilen Material, z. B. Polystyrol, Polypropylen, besonders bevorzugt nach bekannter Spritzgußtechnik hergestellt.

Reaktionen, die in dem Reaktionsgefäß durchgeführt werden können, können physikalischer Art (z.B. Adsorptionen), aber auch biochemischer Art (z.B. Enzymreaktionen, Amplifikationen etc. ) sein.

Ebenfalls wesentlich für das erfindungsgemäße System ist eine Vorrichtung zum automatischen Öffnen der Verschlüsse. Diese Vorrichtung ist technisch auf den jeweils verwendeten Einzelverschluß ausgerichtet.

Zur automatischen Durchführung der Reaktionen werden Flüssigkeiten in das Reaktionsgefäß gefüllt werden. Hierzu hat sich die Verwendung einer automatischen Pipettiereinrichtung, bevorzugt mit Wegwerfspitzen, als besonders vorteilhaft herausgestellt. Dabei können die Komponenten der durchzuführenden Reaktionen in beliebiger geeigneter Reihenfolge pipettiert werden. Es ist beispielsweise möglich, zunächst eine den Analyten enthaltende Probenflüssigkeit in das Reagenzvorratsgefäß zu bringen. Dies kann gewünschtenfalls schon außerhalb des erfindungsgemäßen Systems und ohne die automatische Pipettiereinrichtung geschehen. In einem nachfolgenden Schritt, der gewünschtenfalls mittels der automatischen Pipettiereinrichtung vorgenommen werden kann, werden die für die Reaktion erforderlichen Reagenzien zu der Probenflüssigkeit im Reagenzvorratsgefäß gegeben, wobei das erfindungsgemäße Verfahren ebenfalls Anwendung finden kann.

In einer anderen Ausführungsform sind die erforderlichen Reagenzien in fester oder flüssiger Form im Reaktionsgefäß vorgegeben, und die Probenflüssigkeit wird dazupipettiert.

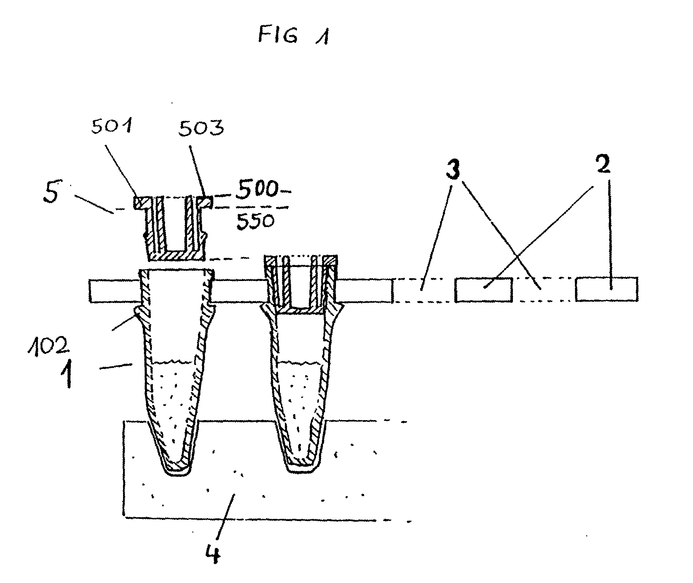

Im folgenden wird ein System zur automatischen Durchführung von Reaktionen in einer Verbundplatte mit 96 wells im Mikrotitrationsplattenraster beschrieben, wobei dies eine besonders bevorzugte Ausführungsform der Anordnung mehrerer Reaktionsgefäße ist. Dieses System eignet sich besonders gut für die Durchführung der Polymerase Chain Reaction unter Durchführung von Thermozyklen. In Figur 1 ist eine Verbundplatte fiir das Gerät Perkin Elmer Cycler 9600 angedeutet. Ein Reaktionsgefäß 1 ist als in einem der Löcher 3 einer Halteplatte 2 für 96 Tubes befindlich gezeichnet. Das Reaktionsgefäß ist durch Widerhaken 102 in der Halteplatte fixiert. Sobald die Verbundplatte mit den Reaktionsgefäßen in den PCR-Cycler eingelegt wird, reichen die Spitzen der Reaktionsgefäße in den Thermoblock 4 des Cyclers hinein. In dieser Figur ist schematisch ein fiir die Erfindung geeigneter Deckel 5 eingezeichnet. Zum Verschluß des Reaktionsgefäßes wird der Deckel 5 in das Reaktionsgefäß 1 bis zu einem Anschlag 501 hineingedrückt.

Ebenfalls Gegenstand der Erfindung ist ein Deckel für ein Reaktionsgefäß, welcher einen in die Öffnung des Reaktionsgefäßes hineinragenden Teil aufweist, dadurch gekennzeichnet, daß dieser Teil Mittel zur Entfernung des Deckels aus dem Reaktionsgefäß beinhaltet.

Der erfindungsgemäße Deckel weist mindestens zwei Teile auf. Einer der Teile (Bezugszahl 550) ist so gestaltet, daß er in die Öffnung des zugehörigen Reaktionsgefäßes hineinragt, wenn das Reaktionsgefäß durch den Deckel verschlossen ist. Ein anderer Teil 500 ragt dann noch aus dem Reaktionsgefäß hinaus.

Der Teil 550 enthält Mittel 551 zur Entfernung des Deckels von dem Reaktionsgefäß. Außerdem kann dieser Teil Mittel zur Abdichtung des Deckels gegenüber dem Reaktionsgefäß aufweisen, z. B. Dichtlippen oder Dichtwülste 552.

Der Teil 500 enthält bevorzugt einen Anschlag 501, der verhindert, daß der Deckel in beim Verschließen des Reaktionsgefäßes vollständig in diesem verschwindet. Dadurch wird auch eine exakte Orientierung der Deckeloberfläche 503 gewährleistet. Der Teil 500 des Deckels ragt bevorzugt nur sehr wenig über die Öffnung des Reaktionsgefäßes hinaus. Die aus dem Reaktionsgefäß herausragenden Teile des Deckels schließen im wesentlichen mit einer Oberfläche 503 ab. Dies ist von Vorteil, wenn eine Deckelheizung zur Vermeidung der Kondensation von Wasserdampf aus der Reaktionsflüssigkeit am Deckel verwendet werden soll. Diese kann dann plan auf den Oberflächen 503 mehrerer Reaktionsgefäße aufliegen.

Als Mittel 551 zur Entfernung des Deckels können alle konstruktiven Ausführungen dienen, die bewirken, daß der Widerstand zwischen der Vorrichtung zum automatischen Entfernen des Deckels und dem Deckel größer ist als der Widerstand zwischen dem Deckel und der Innenwand des Reaktionsgefäßes.

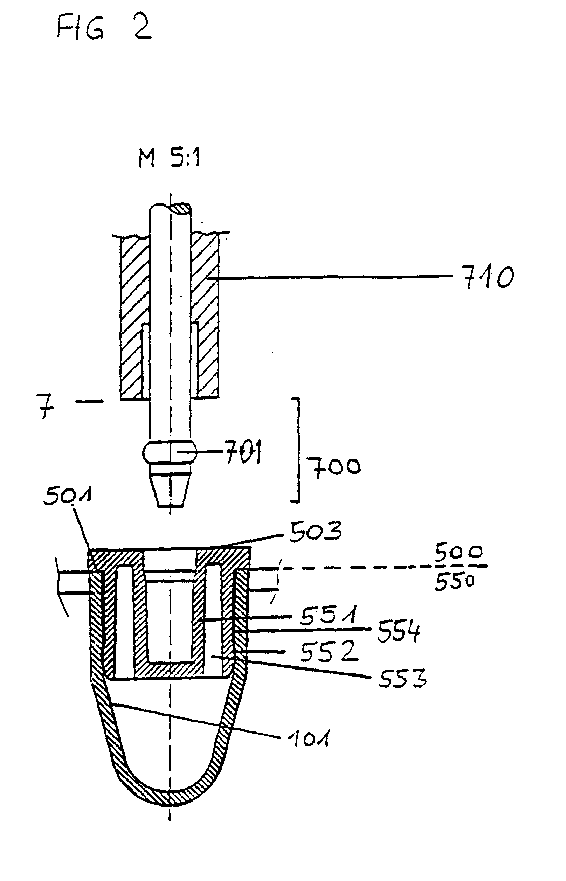

In Figur 2 ist eine erste Ausführungsform für einen erfindungsgemäßen Deckel (im Zustand eines verschlossenen Reaktionsgefäßes) sowie eine geeignete Öffnungsvorrichtung 7 gezeigt. Die Mittel zur Entfernung des Deckels sind hier als konisch geformte Ausnehmung 551 ausgestaltet, welche gegenüber dem Reaktionsgefäß geschlossen, jedoch zur Umgebung hin geöffnet ist, um den Entnahmedorn 700 der Vorrichtung zum Entfernen des Deckels aufnehmen zu können. Gegen die Innenwand 101 des Reaktionsgefäßes drückt hierbei ein Bauteil, welches einen rundum laufenden Dichtungswulst 552 aufweist. Ein besonders vorteilhaftes konstruktives Detail des erfindungsgemäßen Deckels ist die konstruktive Trennung der Mittel 551 von der Dichtungslippe 552 vor, so daß der bei Einfiihren des Entnahmedorns in den Teil 550 auf die Mittel ausgeübte Druck nicht zu einer wesentlichen Erhöhung des Druckes auf die Dichtlippe führt. Dadurch wird eine starke Erhöhung des festen Sitzes des Deckels bei Einführung des Entnahmedorns 700 vermieden. Die konstruktive Trennung findet in Figur 2 durch das Vorsehen eines Zwischenraumes 553 zwischen den Mitteln 551 und der Dichtlippe 552 statt. In Figur 2 ist dieser Zwischenraum in Richtung auf den Innenraum des Reaktionsgefäßes offen. Da die Oberfläche 503 des Deckels im vorliegenden Fall relativ groß ist, ist die Auflagefläche einer Deckelheizung und der Wärmeübergang von der Heizung auf den Deckel besonders groß ist.

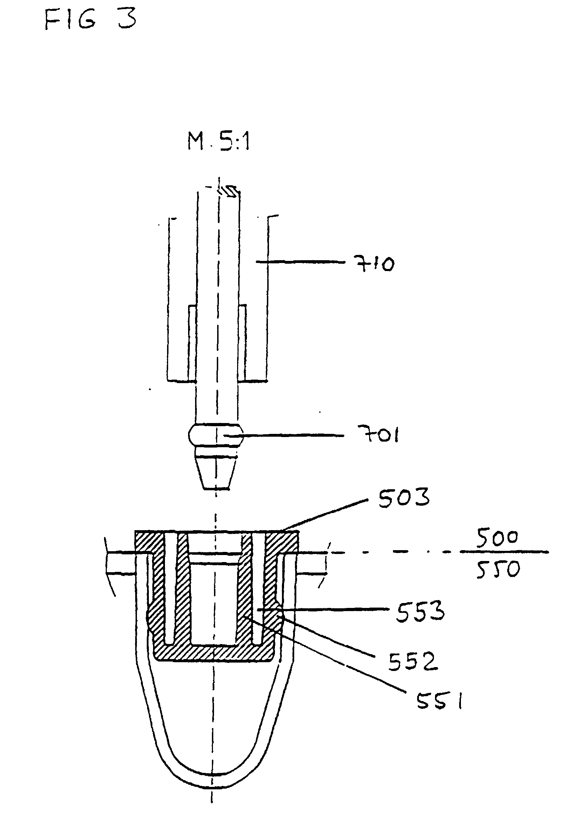

In Figur 3 ist ein besonders vorteilhafter Deckel gezeigt. Er unterscheidet sich im wesentlichen dadurch von dem in Figur 2 gezeigten Deckel, daß der Zwischenraum 553 nicht in Richtung auf das Reaktionsgefäß, sondern in Richtung auf die Umgebung offen gestaltet ist. Diese Ausführungsform hat den Vorteil, daß die Kontaktfläche des Deckels zur Reaktionslösung bzw. dem überstehenden Gasraum klein ist, so daß für eine eventuelle Kondensation von Flüssigkeit an den Deckel nur wenig Oberfläche zur Verfügung steht.

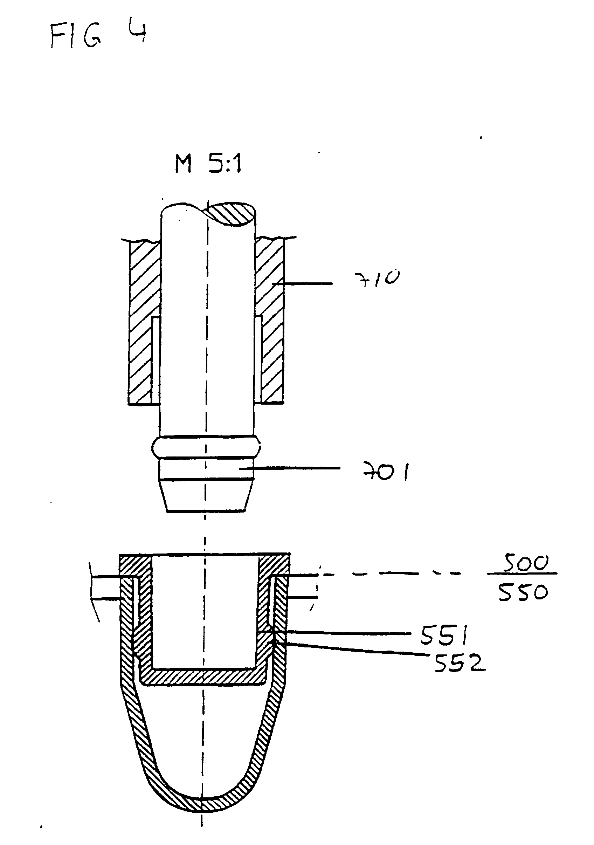

In Figur 4 ist ein Deckel abgebildet, bei dem kein Zwischenraum 553 vorgesehen ist. Dieser Deckel ist zwar fiir das erfindungsgemäße System ebenfalls brauchbar, jedoch mit dem Nachteil, daß das Einführen des Entnahmedorns den Druck auf die Reagenzvorratsgefäßinnenwand erhöht und somit eine höhere Kraft zur Entfernung des Deckels von dem Reaktionsgefäß erforderlich wird, als in den oben beschriebenen Fällen.

Die Vorrichtung zum automatischen Öffnen der Verschlüsse ist auf die Form der Mittel zur Entfernung des Deckels im Deckel abgestimmt. Als besonders vorteilhaft haben sich Dorne erwiesen, die einen Entnahmewulst 701 aufweisen, der über einen entsprechenden Widerstand des Deckels in den Teil 550 hineingedrückt werden muß. Beim Zurückziehen des Dorns wirkt der Wulst als Widerstand. Dadurch, daß der Druck des Deckels auf die Reaktionsgefäßinnenwand kleiner ist als der Widerstand des Wulstes mit dem Deckel, wird der Deckel aus dem Reaktionsgefäß entfernt.

Damit der Entnahmedorn 7 mehrfach verwendet werden kann, enthält die Vorrichtung bevorzugterweise auch ein Bauteil zum Abstreifen des vom Reaktionsgefäß entfernten Deckels vom Entnahmedorn. Dies kann beispielsweise eine Abstreiferhülse 702 sein.

Die Vorrichtung ist für die Bearbeitung von Proben in Reaktionsgefäßen auf die Anordnung der Reaktionsgefäße ausgerichtet. Im Falle einer Verwendung einer Verbundplatte befindet sich die Vorrichtung daher an einer X-Y Transporteinheit, mit der die Vorrichtung über das jeweilige Reaktionsgefäß gefahren werden kann. Durch Bewegung des Entnahmedorns 700 auf die verschlossenen Reaktionsgefäße zu (Z-Richtung), wird die Spitze des Entnahmedorns in den Deckel eingeführt. Diese Bewegung wird im allgemeinen senkrecht zu der Transportebene sein. Obwohl die beiden Bewegungsvorgänge prinzipiell durch jeden computergesteuerten Roboter ausführbar sind, ist es auch möglich, übliche Pipettierautomaten z.B. von Tecan durch Ersatz der üblicherweise verwendeten Zahnstange zum Pipettieren durch eine Zahnstange mit einer Vorrichtung 7, umzurüsten. Es ist auch möglich, die Vorrichtung zum automatischen Öffnen des Deckels zusätzlich zur Pipettiereinheit an einer Zahnstange eines Pipettierautomaten zu befestigen. Der Pipettierautomat wird entsprechend programmiert.

Zur parallelen Bearbeitung mehrerer Reaktionsgefäße, z. B. einer Reihe einer Mikrotitrationsplatte, können mehrere Vorrichtungen 7 an einer Transporteinheit angebracht werden, so daß mehrere Einzeldeckel parallel geöffnet werden können. Diese Ausführungsform erscheint im Hinblick auf die Vermeidung von Kontaminationen jedoch nicht bevorzugt.

Die vorliegende Erfindung, insbesondere der automatengängige Deckel, ist nicht nur für Reaktionsgefäße verwendbar, sondern für jede Art von Gefäßen in einem System zur Durchführung mehrerer Reaktionen. Dazu gehören neben den Gefäßen in denen eine Reaktion zwischen mehreren Reaktionspartnern abläuft, und welche hier Reaktionsgefäße genannt werden, auch Gefäße, in denen die einzelnen Reaktionspartner der gewünschten Reaktion vorgehalten werden. Im Falle der Analytik von flüssigen Proben kann hier zwischen Probengefäßen und Reagenzvorratsgefäßen unterschieden werden. In einem Probengefäß wird eine Flüssigkeit, die auf das Vorhandensein bzw. die Menge eines oder mehrerer Analyten untersucht werden soll, vorgehalten. Die Probenflüssigkeit wird nach Probennahme (z.B. Gewinnung von Blut eines Patienten, der untersucht werden soll) und evtl. Aufarbeitung (Gewinnung von Plasma oder Serum) in ein Probengefäß überführt und gewünschtenfalls mit einem erfindungsgemäßen automatengängigen Deckel veschlossen. Dann wird das Probengefäß einzeln oder zusammen mit weiteren Probengefäßen in das System, z.B. einen automatischen Analysenautomaten, eingeführt. Zum Ablauf eines erfindungsgemäßen Verfahrens wird, bevor eine Überführung von Probenflüssigkeit aus dem Probengefäß in ein Reaktionsgefäß vorgenommen werden soll, der Deckel vom Probengefäß entfernt und die gewünschte Menge der Probenflüssigkeit entnommen. Ein Vorteil des erfindungsgemäßen Systems, bei dem auch die Probengefäße mittels eines automatengängigen Deckels verschlossen sind, ist die Möglichkeit des einfachen Wiederverschlusses des Probengefäßes mittels des selben oder eines neuen Deckels. Für den bevorzugten Fall des Wiederverschlusses mit einem neuen Deckel wird der alte Deckel vom Entnahmedorn durch die Abstreiferhülse in ein Abfallgefäß überführt und ein neuer Deckel aus einem Vorratsgefäß für Deckel auf den Entnahmedorn aufgezogen. Der neue Deckel wird daraufhin auf das Probengefäß aufgesetzt und der Entnahmedorn entfernt, wobei der Deckel auf dem Probengefäß verbleibt. Für eine weitere Bestimmung eines weiteren Analyten aus der selben Probe wird der Deckel erneut entfernt und wiederum eine bestimmte Menge der Probenflüssigkeit entnommen. Wenn der Deckel ein Septum beinhaltet, kann eine Probenentnahme aus dem Probengefäß auch ohne Entfernen des Deckels mit einer Stechpipette vorgenommen werden.

Bei der Abarbeitung von Reaktionen kann es erforderlich sein, weitere Reagenzien in das Reaktionsgefäß zu überführen. Diese werden in Reagenzvorratsgefäßen vorgehalten, die ebenfalls erfindungsgemäß verschlossen und geöffnet werden können. Unter einem Reagenzvorratsgefäß ist daher ein Vorratsgefäß für Reagenzien zu verstehen, wobei diese Reagenzien bei der Durchführung von Reaktionen in Reaktionsgefäßen verwendet werden. Da die Reagenzien in der Regel in größeren Mengen, z.B. für die Durchführung mehrerer Reaktionen, bereitgehalten werden müssen, haben diese Reagenzvorratsgefäße oft die Form von Flaschen mit Volumina zwischen 20 und 500 ml. Auch solche Reagenzvorratsgefäße können durch einen automatengängigen Deckel gemäß der Erfindung geschlossen sein. Dies wird in der Regel herstellerseitig geschehen. Der Kunde setzt das Reagenzvorratsgefäß in eine geeignete Position des Systems ein. Sobald in einem Reaktionsgefäß eine Reaktion durchgeführt werden soll, welche die Verwendung des in dem bestimmen Reagenzvorratsgefäß vorgehaltenen Reagenzes erfordert, wird der automatengängige Deckel von dem Reagenzvorratsgefäß entfernt und die erforderliche Menge Reagenz entnommen und ins Reaktionsgefäß überführt. Anschließend kann das Reagenzvorratsgefäß durch den abgenommenen oder einen neuen Deckel (siehe Probengefäß) wieder verschlossen werden.

Für den Fall von großvolumigen Reagenzvorratsgefäßen können prinzipiell die bisher verwendeten Reagenzvorratsgefäße weiterverwendet werden, wenn die üblicherweise verwendeten Schraubdeckel durch Einsatz des erfindungsgemäßen automatengängigen Deckels modifiziert werden. Dazu wird bevorzugt in der Oberseite des Schraubdeckels eine kleine Öffnung vorgesehen, welche dann mit einem erfindungsgemäßen Deckel verschlossen wird. Dieses System hat den Vorteil, daß das Reagenzvorratsgefäß durch eine relativ große, durch den Schraubdeckel verschlossene Öffnung befüllt werden kann, jedoch die Entnahme von Reagenzflüssigkeit durch die relativ kleine, erfindungsgemäß verschlossene Öffnung vorgenommen werden kann.

Das Verfahren läuft prinzipiell ähnlich ab wie die bisher bekannten manuellen Verfahren, jedoch unter Verwendung eines automatengängigen Deckels und in einem System. Selbstverständlich können die automatengängigen Deckel auch manuell geöffnet und verschlossen werden. Zentrales Merkmal ist die Zurverfügungstellung von Reaktionsgefäßen, die eine Reaktionsmischung enthalten und die mittels eines automatengängigen Deckels verschlossen sind. Dies gilt besonders für Reaktionen, welche in Thermozyklen verlaufen. Nach Beendigung der Reaktion wird der Deckel mit Hilfe einer Vorrichtung zum Entfernen des Deckels vom Reaktionsgefäß gelöst. Dies geschieht durch Einführen der Vorrichtung in die im Deckel vorgesehenen Mittel und Herausziehen der Vorrichtung mitsamt dem Deckel. Der Deckel kann anschließend durch Zurückziehen des Entnahmedorns in eine Abstreiferhülse vom Entnahmedorn abgestreift werden. Danach kann die Reaktionsmischung aus dem Reaktionsgefäß entnommen oder darin weiterverarbeitet und gewünschtenfalls sogar wieder mittels eines (neuen) Deckels verschlossen werden.

Vorteil des erfindungsgemäßen Deckels ist die Verwendbarkeit einer Deckelheizung aufgrund der besonders einfachen Möglichkeit, eine flache Oberfläche vorzusehen. Durch die Verlagerung der Mittel zum Öffnen des Deckels in den Raum unterhalb des Gefäßes wird Material gespart und eine kompakte Bauweise ermöglicht. Ein weiterer Vorteil ist die Möglichkeit, den Gasraum über der Reaktionslösung durch die in das Reaktionsgefäß hineinragenden Teile des Deckels so klein wie möglich zu halten. Dieser Vorteil hat zur Folge, daß die Höhe der Wandungen des Reaktionsgefäßes nicht verringert werden muß, was im Hinblick auf Spritzmöglichkeiten bei Pipettiervorgängen nachteilig wäre. Die Automatengängigkeit des erfindungsgemäßen Deckels erleichtert die Vollautomatisierbarkeit von Systemen zum Nachweis von Analyten in Flüssigkeiten.

Die Erfindung kann insbesondere für die Analyse von Bestandteilen von Körperflüssigkeiten nach Prinzip von Immunoassays oder Nukleinsäurediagnostik angewendet werden. Wegen der oben genannten Vorteile ist die Anwendung beim Nachweis von Nukleinsäuren besonders bevorzugt. Nachweisverfahren fiir Nukleinsäuren können als Schritte zur Bearbeitung die Amplifikation von Nukleinsäuren in einer Flüssigkeit, z.B. nach Art der Polymerasekettenreaktion (EP-B-0 200 362) oder eines anderen Systems beinhalten. Auch die Durchführung von daran angeschlossenen Hybridisierungsreaktionen mit Nachweissonden kann in den erfindungsgemäßen Reaktionsgefäßen durchgeführt werden. Hierbei ist auch die mehrfache Öffnung des Reaktionsgefäßes mit Hilfe eines erfindungsgemäßen Deckels möglich.

In Figur 1 ist eine Verbundplatte mit Reaktionsgefäß 1, Thermoblock 4 und erfindungsgemäßem Deckel gezeigt.

In Figur 2 bis 4 sind Deckel zur Durchführung des erfindungsgemäßen Verfahrens in Zusammenschau mit geeigneter Entnahmevorrichtung und Reaktionsgefäß gezeigt.

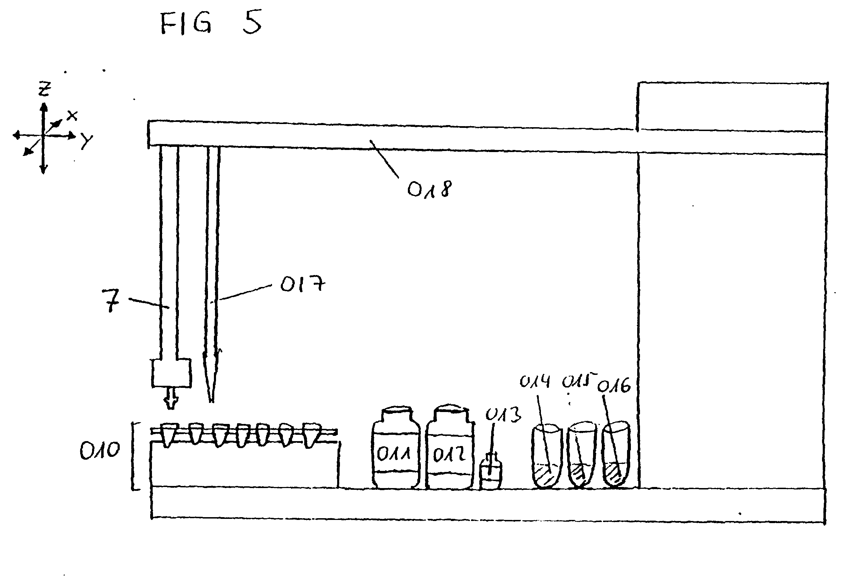

In Figur 5 ist ein erfindungsgemäßes System zur Durchführung von Reaktionen gezeigt. Dabei ist eine Verbundplatte mit Reaktionsgefäßen und Deckeln mit Bezugszeichen 010 angedeutet. Es können Reagenzvorratsbehälter 011, 012 und 013 sowie mehrere Probenprimärgefäße 014, 015 und 016 vorgesehen sein, aus denen die für die Reaktion erforderlichen Mengen von der Pipettiereinheit 017 entnommen und in die Reaktionsgefäße 5 pipettiert werden. Nach Verschluß der Reaktionsgefäße, der gewünschtenfalls ebenfalls mit der Entnahmevorrichtung 7 vorgenommen werden kann, Reaktion und Öffnen des Deckels mit der Entnahmevorrichtung, können weitere Reagenzien zupipettiert werden. Gewünschtenfalls wird dann eine Messung von Signalen entweder im Reaktionsgefäß selbst oder nach Entfernen der Reaktionsmischung in eine Messeinheit vorgenommen. In der Figur ist die Zahnstange 018 der XYZ-Transporteinheit eines üblichen Pipettierautomaten (z. B der Firma Tecan) angedeutet.

Die erwähnte Kontaminationsgefahr kann sich auch auf Reagenzien beziehen, die offen auf einem Gerät stehen. Figur 6 zeigt eine erfindungsgemäße Ausführung eines Schraubdeckels, der sich mit gängigen Maschinen in der Produktion verarbeiten läßt und anschließend systemgängig ist. Der Schraubdeckel 8 weist ein Schraubgewinde 801 und eine Entnahmeöffnung 802 auf, welche mit Hilfe eines erfindungsgemäßen Deckels verschlossen oder geöffnet werden kann.

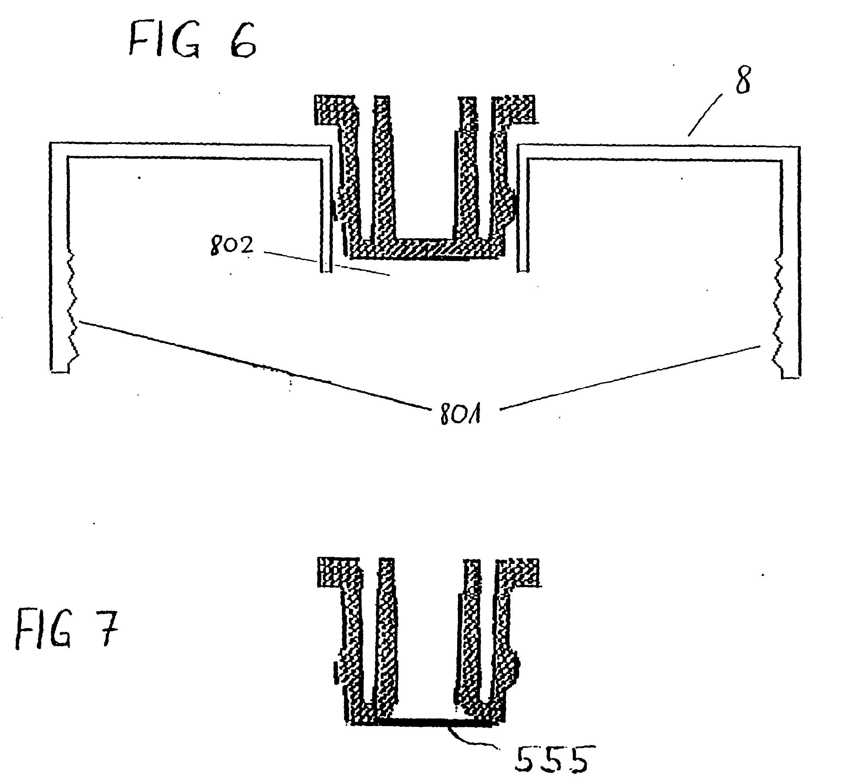

Analog gilt für die Proben, die in eine Ausführungsform mit Septum direkt nach Blutentnahme in ein spezielles Probenröhrchen mittels Spritze überführt werden können. In Figur 7 ist hierzu ein modifizierter erfindungsgemäßer Deckel gezeigt. Er weist ein Septum 555 auf, welches mittels einer üblichen Pipettennadel durchstochen werden kann. Der Vorteil dieser Ausführungsform ist die Möglichkeit einer mehrfachen Probenentnahme, ohne daß der erfindungsgemäße Deckel entfernt werden muß. Das Septum befindet sich bevorzugt in dem in das Probengefäß hineinragenden Teil des Deckels.

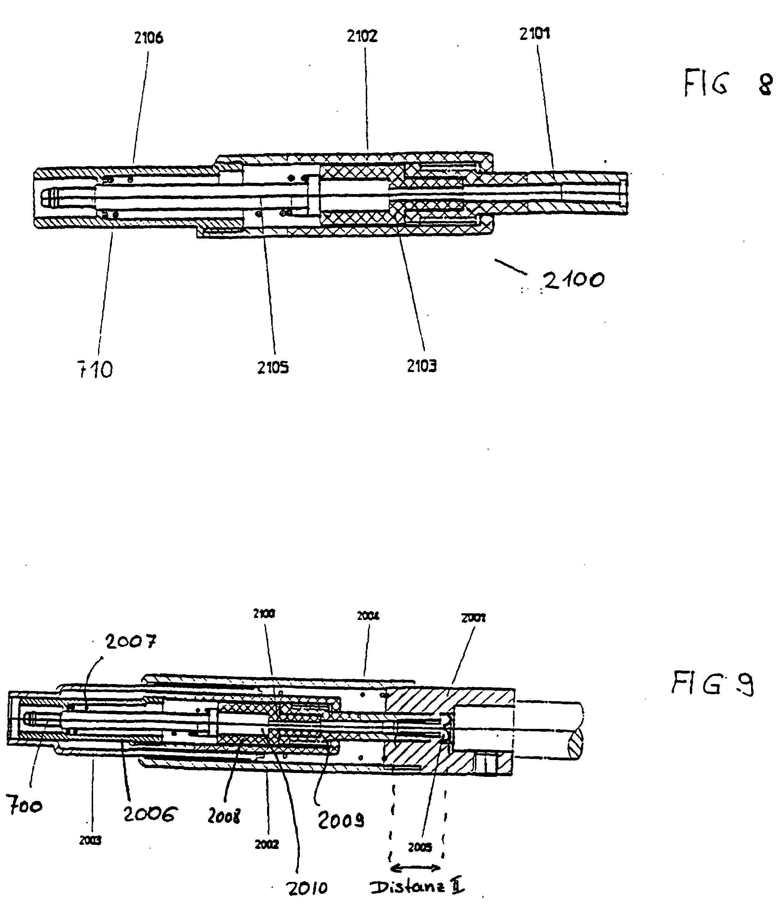

In Figur 8 ist eine Rasteinheit für eine Entnahmevorrichtung gezeigt. Diese wird über ein Druckstück 2101 bedient, welches zusammen mit dem Rastelement 2103 durch eine Abdrückfeder 2106 um einen Druckstift 2105 in einer Ausgangsstellung gehalten wird. Das Rastelement 2103 läuft hierbei in einer Rasthülse 2102 und der Druckstift 2105 in einer Abdrückhülse 2104.

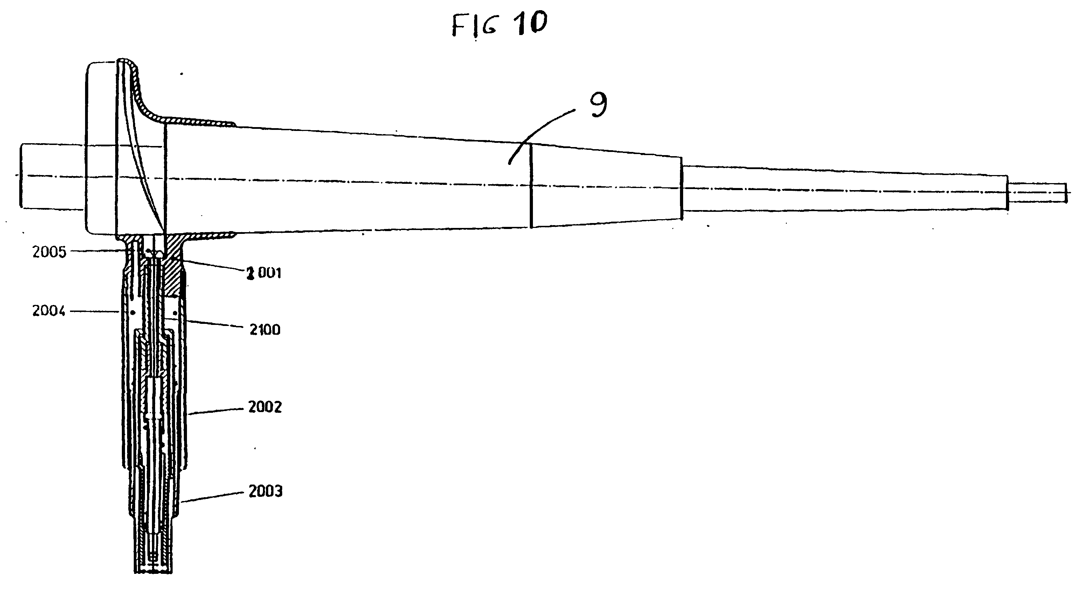

Diese Rasteinheit kann sowohl manuell als auch innerhalb eines Systems zur Entnahme von Deckeln verwendet werden. Bevorzugt ist das Rastelement in einer äußeren Hülse 2002 gehaltert, welche in Figur 9 gezeigt ist. Die Rasteinheit mit dem Bezugszeichen 2100 gekennzeichnet.

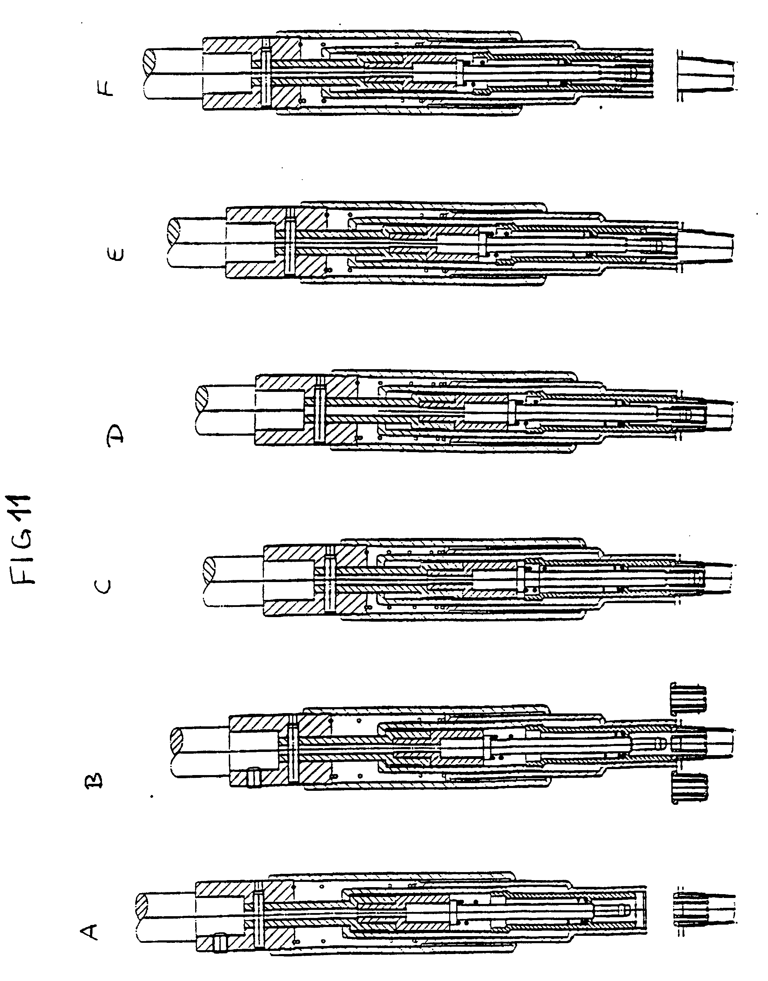

In Figur 10 ist ein manuelles Entnahmegerät gezeigt. Es enthält als einen Teil eine Vorrichtung zum Entfernen des Deckels bzw. zum Anbringen des Deckels und als einen zweiten Teil eine Vorrichtung zum Pipettieren einer Flüssigkeit

In Figur 11 sind Stufen A bis F zur Entfernung eines Deckels von einem Gefäß gezeigt. Stufe A zeigt die Ausgangsstellung des Entnahmeteils und ein mittels eines erfindungsgemäßen Deckels verschlossenes Gefäß. In Stufe B wird das Entnahmeelement auf die Baueinheit, welche das Gefäß enthält, aufgesetzt. In Stufe C wird der Entnahmedorn in den Teil 550 des Deckels eingeführt. Durch Zurückziehen des Entnahmedorns um eine kurze Wegstrecke, rastet der Entnahmedorn an der vorgesehenen Engstelle ein (Stufe D). Durch weiteres Zurückziehen des Entnahmedorns zusammen mit der Abstreifehülse wird der Deckel von dem Gefäß entfernt (Stufe E). In Stufe F wird die Entnahmeeinheit von der Baueinheit mit dem Reaktionsgefäß abgehoben. In einer nicht gezeigten weiteren Stufe G wird der Deckel durch Vorschieben der Abstreiferhülse über den Entnahmewulst hinaus abgestreift. Danach steht die Entnahmeeinheit wieder in Ausgangsstellung oder kann in die Ausgangsstellung (Stufe A) zurücküberführt werden.

Ebenfalls Gegenstand der Erfindung ist eine Vorrichtung zur Bearbeitung einer Flüssigkeit, die sich in einem verschlossenen oder verschließbaren Gefäß befindet, enthaltend eine Vorrichtung zum Pipettieren der Flüssigkeit und eine Vorrichtung zum Entfernen oder/und Anbringen eines Verschlusses des Gefäßes. Als eine Vorrichtung zum Pipettieren der Flüssigkeit kann einerseits eine kommerziell erhältliche Kolbenhubpipette (z. B. Firma Eppendorff, BRD) eingesetzt werden. An dieser Pipette ist, bevorzugt in der Nähe des Handgriffes, ein Deckelhandler angebracht. Dieser wirkt bevorzugt durch Druck der Gesamtvorrichtung auf ein verschlossenes Gefäß, wenn der Deckel entfernt werden soll bzw. durch Druck auf ein nicht verschlossenes Gefäß, wenn das Gefäß mit Hilfe eines Verschlusses verschlossen werden soll. Als besonders wirksam haben sich die erfindungsgemäßen Deckel erwiesen.

Für den Fall einer automatischen Bearbeitung von Flüssigkeiten kann der Deckelhandler an einem X-, Y-, Z-Arm eines Roboters (Tecan) oder eines zylindrisch angeordneten Roboterarms (z. B. von der Firma Zymark) angebracht sein. Außerdem ist es möglich, den Deckelhandler in mehrfacher Ausführung, z. B. in 8fach oder 12fach nebeneinander positionierter Weise einzusetzen. Der Deckelhandler kann in einer anderen Ausführungsform auch an einem Arm eines konventionellen Mikrotiterplattenwaschers (auch dieser führt X-, Y-, Z-Bewegungen aus) befestigt sein. Des weiteren kann der erfindungsgemäße Deckelhandler auch mit einem Thermocycler zur Durchführung thermozyklischer Reaktionen, wie z. B. der Polymerasekettenreaktion, befestigt sein, so daß hiermit eine koordinierte Entfernung von Deckeln von Gefäßen, in welche Reagenzien eingeführt werden sollen, möglich ist. Es ist außerdem möglich, den erfindungsgemäßen Deckelhandler mit Magnetseparatoren, Heizblöcken oder Wasserbädern zu kombinieren. Alle diese Geräte sind bei der Bearbeitung von Flüssigkeiten von Nutzen.

Ein weiteres Merkmal der Erfindung ist daher eine Vorrichtung zum Ergreifen eines Gefäßdeckels, enthaltend ein Bauteil (700), welches in den Innenraum des Deckels eingreift und sich in diesem festklemmt, und ein Bauteil (710), mit dem der ergriffene Deckel von dem Bauteil, welches in diesem festgeklemmt ist, abgestreift werden kann. Bevorzugt enthält diese Vorrichtung einen Rastmechanismus, welcher, z. B. in Art eines Kugelschreibermechanismus, allein durch Ausüben von Druck auf die Vorrichtung, eine vorbestimmte Abfolge von Rastpositionen abfahren kann. Besonders bevorzugt ist der Fall, daß der Druck auf die äußere Hülle der Vorrichtung ausgeübt wird.

### Beispiel 1

Am Beispiel des Ablaufschemas einer Amplifikationsreaktion wird ein mögliches Protokoll für das Zusammenspiel des Laborroboters mit den Gegenständen der Erfindung dargestellt. Das Zusammenspiel aller Elemente ermöglicht eine automatische Durchführung des Reaktionsablaufes.

Die vorgeschalteten Schritte zur Gewinnung der analythaltigen Probe aus körpereigenen Flüssigkeiten (z. B. Blut) geschehen nach allgemein üblichen Verfahren und werden daher nicht beschrieben. Zu Beginn des Ablaufs der automatischen Amplifikationsdurchführung wird daher von einem Analyten in einer Probenflüssigkeit (in diesem Fall von gereinigter Nukleinsäure aus einer Blutprobe) ausgegangen, welcher in einem erfindungsgemäßen Reaktionsgefäß mit Einzelverschluß vorliegt.

Das System zur kontaminationsfreien Bearbeitung von Reaktionsabläufen enthält ferner:
- einen Laborroboter der Firma Tecan (Typ RSP9652SLD)
   Arm 1 enthält die automatische Pipettiereinheit (017)
   Arm 2 enthält die Öffnungs- und Entnahmevorrichtung (7),
- einen Thermocycler der Firma Perkin Elmer mit einer Verbundplatte (2) mit Reaktionsgefäßen (1) incl. Einzelverschlüsse (5),
   die Verbundplatte besteht aus einer Halteplatte mit Ausnehmungen für die Aufnahme der Reaktionsgefäße und einem darunter angeordneten Thermoblock (4), der ebenfalls entsprechende Ausnehmungen hat.

Auf der Laborroboter-Plattform befinden sich die notwendigen Reagenzgefäße, die verschlossene Probe mit dem Analyten für die Amplifikationsreaktion, die Meßzellen bzw. die Aufbewahrungsgefäße, Wastebehälter und die Pipettenspitzenaufnahme mit Pipetten. Alle Gefäße sind mit Einzelverschlüssen verschlossen und werden vor Gebrauch geöffnet.

Das nachfolgende Ablaufschema geht davon aus, daß alle Einheiten, Gefäße, Elemente und Substanzen betriebsbereit vorliegen und ein erneuter Start einer Amplifikationsreaktion ansteht. Als "Stand-by"-Stellung des Armes wird eine definierte Stellung auf der Laborroboter-Plattform bezeichnet, die sich außerhalb des Gefäßbereiches befindet und einen weiteren Zugriff des anderen Arms auf das gleiche Gefäß erlaubt. Für jeden der beiden Arme gibt es eine eigene "Stand-by"-Stellung.

### Ablaufschema

### Schritt Aktionen

Start des Ablaufschemas
1 Arm 1 mit Pipettiereinheit führt von der Ausgangsstellung zur Pipettenspitzenaufnahme und bestückt die Einheit mit einer neuen Pipettenspitze,
2 Arm 2 mit Öffnungs- und Entnahmevorrichtung (7) fährt von der Ausgangsstellung zum Probegefäß mit dem Analyten (014),
3 Öffnungs- und Entnahmevorrichtungsablauf (Arm 2),
   Vorrichtung fährt in Ausgangsstellung,
   Aufsetzen des Entnahmeelementes auf die Deckeloberfläche,
   Einführung des Entnahmedorns (700) in das Deckelinnere,
   Einpressen des Entnahmedorns durch Anheben der Entnahmevorrichtung (7), Entfernen des Deckels vom Gefäß
   Arm 2 mit Deckel fährt aus dem Bereich der Reaktionsgefäßöffnung neben das Gefäß in ''Stand-by"-Stellung.
4 Arm 1 mit Pipettiereinheit und Pipettenspitze fährt von der Pipettenspitzeaufnahme zum Probegefäß des Analyten,
5 **Probeentnahmeablauf (Arm 1)**
   Absenken der Pipettiereinheit mit Pipettenspitze,
   Ansaugen der Probeflüssigkeit in die Spitze,
   Abheben der Pipettiereinheit mit Pipettenspitze plus Probeflüssigkeit,
6 Arm 1 mit Pipettiereinheit mit Pipettenspitze plus Probeflüssigkeit fährt neben die Öffnung des Amplifikationsgefäßes in "Stand-by"-Stellung
7 Arm 2 mit Deckel führt zum Probegefäß der Analytenöffnung
8 **Aufsetzungs- und Verschließungsablauf (Arm 2)**
   Arm 2 mit Deckel fährt über die Gefäßöffnung,
   Absenken des Deckels auf das Gefäß,
   Abziehen des Deckels vom Entnahmedorn der Öffnungsvorrichtung,
   Gefäß ist mit Deckel verschlossen,
   Arm 2 fährt zur "Stand-by"-Stellung.
9 Arm 2 mit Öffnungs- und Entnahmevorrichtung fährt von der "Stand-by"-Stellung zum Reaktionsgefäß (1) (Amplifikationsgefäß) in definierter Position auf der Verbundplatte
10 **Öffnungs- und Entnahmevorrichtungsablauf (Arm 2)**
   Vorrichtung (7) fährt in Ausgangsstellung,
   Aufsetzen des Entnahmeelementes auf die Deckeloberfläche eines Reaktionsgefäßes (1),
   Einführung des Entnahmedorns in das Deckelinnere,
   Einpressen des Entnahmedorns,
   Entfernen des Deckels vom Gefäß,
   Abheben der Öffnungs- und Entnahmeeinheit mit Deckel vom Gefäß,
   Arm 2 mit Deckel fährt aus dem Bereich der Gefäßöffnung neben das Gefäß in "Stand-by"-Stellung
11 Arm 1 mit Pipettiereinheit mit Pipettenspitze plus Probeflüssigkeit fährt von der "Stand-by"-Stellung zur Reaktionsgefäß (1) (Amplifikationsgfäß) -Öffnung
12 **Probeabgabeablauf (Arm 1)**
   Absenken der Pipettiereinheit mit Pipettenspitze plus Probe,
   Entleeren der Probeflüssigkeit aus der Spitze,
   Abheben der Pipettiereinheit mit Pipettenspitze,
   Arm 1 fährt zum Wastebehälter,
   Abgabe der gebrauchten Spitze,
   Arm 1 fährt in Ausgangsposition
13 Arm 2 mit Deckel fährt zur Amplifikationsgefäßöffnung
14 **Aufsetzungs- und Verschließungsablauf (Arm 2)**
   Arm 2 mit Deckel fährt über die Gefäßöffnung,
   Absenken des Deckels auf das Gefäß,
   Abziehen des Deckels vom Entnahmedorn der Öffnungsvorrichtung,
   Gefäß ist mit Deckel verschlossen,
   Arm 2 fährt in "Stand-by"-Stellung
15 Arm 1 mit Pipettiereinheit fährt von der Ausgangsstellung zur Pipettenspitzenaufnahme und bestückt die Einheit mit einer neuen Pipettenspitze
16 Arm 2 mit Öffnungs- und Entnahmevorrichtung fährt von der "Stand-by"-Stellung zum Reagenzgefäß auf der Plattform
17 **Öffnungs- und Entnahmevorrichtungsablauf (Arm 2)**
   Vorrichtung (7) fährt in Ausgangsstellung,
   Aufsetzen des Entnahmeelementes auf die Deckeloberfläche,
   Einführung des Entnahmedorns auf die Deckeloberfläche,
   Einführung des Entnahmedorns in das Deckelinnere,
   Einpressen des Entnahmedorns,
   Deckel vom Gefäß entfernen,
   Öffnungs- und Entnahmeeinheit mit Deckel vom Gefäß abheben,
   Arm 2 mit Deckel fährt aus dem Bereich der Gefäßöffnung neben das Gefäß in "Stand-by"-Position
18 Arm 1 mit Pipettiereinheit und Pipettenspitze fährt von der Pipettenspitzeaufnahme zum Reagenzgefäß (011) auf der Plattform
19 **Reagenzentnahmeablauf (Arm 1)**
   Absenken der Pipettiereinheit mit Pipettenspitze (gegebenenfalls Septum durchstechen),
   Ansaugen der erforderlichen Flüssigkeitsmenge in die Spitze,
   Abheben der Pipettiereinheit mit Pipettenspitze plus Flüssigkeit,
20 Arm 1 mit Pipettiereinheit mit Pipettenspitze plus Flüssigkeit fährt neben die Öffnung des Amplifikationsgefäßes in "Stand-by"-Stellung
21 Arm 2 mit Deckel fährt zur Reagenzgefäßöffnung
22 **Aufsetzungs- und Verschließungsablauf (Arm 2)**
   Arm 2 mit Deckel fährt über die Gefäßöffnung,
   Absenken des Deckels auf das Gefäß,
   Abziehen des Deckels vom Entnahmedorn der Öffnungsvorrichtung mit der Abstreiferhülse (710),
   Gefäß ist mit Deckel verschlossen,
   Arm 2 fährt in "Stand-by"-Stellung
23 Arm 2 mit Öffnungs- und Entnahmevorrichtung fährt von der "Stand-by"-Stellung zum Amplifikationsgefäß in definierter Position auf der Verbundplatte,
24 **Öffnungs- und Entnahmevorrichtungsablauf (Arm 2)**
   Vorrichtung fährt in Ausgangsstellung,
   Aufsetzen des Entnahmeelementes auf die Deckeloberfläche,
   Einführung des Entnahmedorns in das Deckelinnere,
   Einpressen des Entnahmedorns,
   Deckel vom Gefäß entfernen,
   Öffnungs- und Entnahmeeinheit mit Deckel vom Gefäß abheben,
   Arm 2 mit Deckel fährt aus dem Bereich der Gefäßöffnung neben das Gefäß in "Stand-by"-Stellung
25 Arm 2 mit Pipettiereinheit mit Pipettenspitze plus Flüssigkeit fährt von der "Stand-by"-Stellung zur Amplifikationsgefäßöffnung
26 **Reagenzabgabeablauf (Arm 1)**
   Absenken der Pipettiereinheit mit Pipettenspitze plus Probe,
   Entleeren der Reagenzflüssigkeit aus der Spitze,
   Abheben der Pipettiereinheit mit Pipettenspitze,
   Arm 1 fährt zum Wastebehälter,
   Abgabe der gebrauchten Spitze,
   Arm 1 fährt in Ausgangsposition
27 Arm 2 mit Deckel fährt zur Amplifikationsgefäßöffnung
28 **Aufsetzungs- und Verschließungsablauf (Arm 2)**
   Arm 2 mit Deckel fährt über die Gefäßöffnung,
   Absenken des Deckels auf das Gefäß,
   Abziehen des Deckels vom Entnahmedorn der Öffnungsvorrichtung mit der Abstreiferhülse,
   Gefäß ist mit Deckel verschlossen,
   Arm 2 fährt in "Stand-by"-Stellung

Die Schritte 15 bis 28 stellen einen Zyklus dar, welcher für jede erneute Zugabe von Reagenzien in das Amplifikationsgefäß durchlaufen werden muß.

Werden 3 Reagenzzugabezyklen vorausgesetzt, wie beim käuflichen Kit der Firma Hoffmann-La Roche (PCR-Puffer, Taq-polymerase, Primer) sind also weitere 28 Schritte zu durchlaufen.
68 Arm 2 mit Pipettiereinheit fährt in die Ausgangsstellung
69 Amplifikationslösung im Gefäß durchläuft ein Temperaturprogramm wie im oben genannten Kit bzw. Thermocycler empfohlen
70 Ende
71 Arm 2 mit Öffnungs- und Entnahmevorrichtung fährt von der Ausgangsstellung zum Amplifikationsgefäß in definierter Position auf der Verbundplatte
72 **Öffnungs- und Entnahmevorrichtungsablauf (Am 2)**
   Vorrichtung fährt in Ausgangsstellung,
   Aufsetzen des Entnahmeelementes auf die Deckeloberfläche,
   Einführung des Entnahmedorns in das Deckelinnere,
   Einpressen des Entnahmedorns,
   Deckel vom Gefäß entfernen,
   Öffnungs- und Entnahmeeinheit mit Deckel vom Gefäß abheben,
   Arm 2 mit Deckel fährt aus dem Bereich der Gefäßöffnung neben das Gefäß in "Stand-by"-Stellung
73 Arm 2 mit Pipettiereinheit mit Pipettenspitze fährt von der Ausgangsstellung zur Amplifikationsgefäßöffnung
74 **Amplifikationsgemisch (Arm 1)**
   Absenken der Pipiettiereinheit mit Pipettenspitze,
   Ansaugen der gewünschten Flüssigkeitsmenge in die Spitze,
   Abheben der Pipettiereinheit mit Pipettenspitze plus Flüssigkeit
75 Arm 1 mit Pipettiereinheit mit Pipettenspitze plus Flüssigkeit fährt neben die Öffnung des Amplifikationsgefäßes in "Stand-by"-Stellung
76 Arm 2 mit Deckel fährt zur Amplifikationsöffnung
77 **Aufsetzungs- und Verschließungsablauf (Arm 2)**
   Arm 2 mit Deckel fährt über die Gefäßöffnung,
   Absenken des Deckels auf das Gefäß,
   Abziehen des Deckels vom Entnahmedorn der Öffnungsvorrichtung,
   Gefäß ist mit Deckel verschlossen,
   Arm 2 fährt in "Stand-by"-Stellung
78 Arm 2 mit Öffnungs- und Entnahmevorrichtung fährt von der "Stand-by"-Stellung zur Meßzelle bzw. zu einem Aufbewahrungsgefäß in einer definierten Position auf der Plattform
79 **Öffnungs- und Entnahmevorrichtungsablauf (Arm 2)**
   Vorrichtung fährt in Ausgangsstellung,
   Aufsetzen des Entnahmeelementes auf die Deckeloberfläche der Meßzelle bzw. des Aufbewahrungsgefäßes,
   Einführung des Entnahmedorns in das Deckelinnere,
   Einpressen des Entnahmedorns,
   Deckel vom Gefäß entfernen,
   Öffnungs- und Entnahmeeinheit mit Deckel vom Gefäß abheben,
   Arm 2 mit Deckel fährt aus dem Bereich der Gefäßöffnung neben das Gefäß in "Stand-by"-Stellung
80 Arm 2 mit Pipettiereinheit mit Pipettenspitze plus Probeflüssigkeit fährt von der "Stand-by"-Stellung zur Meßzelle bzw. Aufbewahrungsöffnung
81 **Probeabgabeablauf (Arm 1)**
   Absenken der Pipettiereinheit mit Pipettenspitze plus Probe,
   Entleeren der Probeflüssigkeit aus der Spitze,
   Abheben der Pipettiereinheit mit Pipettenspitze,
   Arm 1 fährt zum Wastebehälter,
   Abgabe der gebrauchten Spitze,
   Am 1 fährt in Ausgangsposition
82 Arm 2 mit Deckel fährt zur Meßzelle bzw. Aufbewahrungsgefäßöffnung
83 **Aufsetzungs- und Verschließungsablauf (Arm 2)**
   Arm 2 mit Deckel fährt über die Gefäßöffnung,
   Absenken des Deckels auf das Gefäß,
   Abziehen des Deckels vom Entnahmedorn der Öffnungsvorrichtung,
   Gefäß ist mit Deckel verschlossen,
   Arm 2 fährt in Ausgangsposition

### Ende des Ablaufs

Das Amplifikationsgemisch ist nun zum direkten Nachweis der gebildeten Amplifikate oder zur Durchführung weiterer Reaktionen bereit.

### Beispiel 2

Im Folgenden wird unter Hinweis auf FIG 8 - 11 beschrieben, wie mit Hilfe eines Deckelhandlers ein Deckel entnommen bzw. aufgesetzt werden kann.
A) Öffnen des Deckels
   Der Deckelhandler muß in der Stellung mit Kugelschreibermechanismus Rastposition A vorliegen.
   1.) Aufsetzen des Elementes 2003 (äußere Hülle) auf die Stege des Röhrchens.
   2.) Ausübung einer Kraft nach unten bewirkt die Absenkung des Elementes (2006) auf den Deckel bei gleichzeitiger Anspannung der Feder (2004). Jetzt ist ein erster Druckpunkt erreicht.
   3.) Ausübung einer größeren Kraft als in Schritt 2.) bewirkt:
      a.) der Dorn (700) schiebt sich in die Deckeldomaufnahme.
      b.) die Feder (2007) wird zusammengedrückt
      c.) der Kugelschreibermechanismus (2005) verkürzt die Distanz II und geht in Rastposition B, wobei Feder (2007) in angespanntem Zustand verbleibt.
      Ein zweiter Druckpunkt ist erreicht.
   4.) Loslassen des Deckelhandlers (Rücknahme der Kraftausübung nach unten) bewirkt das Abziehen des Deckels vom Tube. Die dazu notwendige Kraft zur Überwindung der Reibung resultiert aus der Entlastung der Feder (2004). Die Kraft wird über Element (2003) und den Dorn (700) auf den Deckel und die Stege des Röhrchens übertragen.
   5.) Der Deckelhandler mit dem Deckel kann jetzt abgehoben und entfernt werden.
      Der Dorn (700) ist durch die Verkürzung von Distanz II jetzt in das Element (2002) zurückgezogen.
      Der Deckel ist nun partiell kontaminationsgeschützt durch Element (2003), ragt jedoch funktionsgemäß 1 - 2 mm über Element (2003) hinaus.
B) Schließen des Deckels
   6.) Aufsetzen des Deckelhandlers mit Deckel auf die Öffnung des Röhrchens und Ausübung einer Kraft nach unten gerichtet schiebt den Deckel in die Öffnung des Röhrchens.
   7.) Verstärkung der Kraft von 6.) bewirkt das vollständige Einschieben des Deckels und Festklemmen über Reibungskräfte. Die Kraft wird über die Elemente 2005, 2009, 2008, 2010 auf den Dorn (700) übertragen.
      Gleichzeitig wird Feder 2004 gespannt.
      Ein dritter Druckpunkt ist erreicht.
   8.) Verstärkung der Kraft von 7.) schiebt den Dorn (700) aus Element (2006). Gleichzeitig spannt sich Feder (2004) weiter an und gleichzeitig rastet der Kugelschreibermechanismus (2005) wieder in die ursprüngliche Rastposition A zurück und verlängert Distanz II.
   9.) Reduzieren der Kraft nach unten (= Loslassen) schiebt den Deckelhandler vollständig nach oben, wobei die gespannte Feder (2004) über Element (2003) das Röhrchen nieder hält. Die Feder entspannt sich bei diesem Prozeß und der Deckelhandler steht für einen weiteren Öffnungsprozeß bereit.

### Bezugszeichenliste

- 1: Reaktionsgefäß
- 101: Innenwand des Reaktionsgeläßes
- 102: Widerhaken
- 2: Halteplatte
- 3: Löcher in der Halteplatte
- 4: Thermoblock
- 5: Deckel
- 500: Aus dem Reaktionsgefäß hinausragender Teil des Reaktionsgefäßes
- 501: Anschlag
- 503: Oberfläche des Deckels
- 550: In die Öffnung des Reaktionsgefäßes hineinragender Teil
- 551: Mittel zur Entfernung des Deckels
- 552: Dichtwulst
- 553: Zwischenraum
- 554: Auf die Innenwand 101 gerichtete Außenoberfläche des Deckels
- 555: Septum
- 7: Öffnungsvorrichtung/Entnahmevorrichtung
- 700: Entnahmedorn
- 701: Entnahmewulst
- 710: Abstreiferhülse
- 2100: Entnahmevorrichtung
- 2101: Druckstück
- 2102: Rasthülse
- 2103: Rastelement
- 2105: Druckstift
- 2106: Abdrückfeder
- 2001: Aufnahme
- 2002: Hülse
- 2003: Gegenhalter
- 2004: Rastfeder
- 2005: Kreuzschlitzschraube (Kugelschreibermechanismus)
- 2006: Abstreiferhülse
- 2007: Feder
- 2008: Schubelement
- 2009: Schubelement
- 2010: Schubelement
- 010: Verbundplatte mit Reaktionsgefäßen und Deckeln
- 011, 012, 013: Reagenzvorratsgefäße
- 014,: 015, 016 Probengefäße
- 017: Pipettiereinheit
- 018: Zahnstange
- 8: Schraubdeckel
- 801: Schraubgewinde
- 802: Entnahmeöffnung des Schraubdeckels
- 9: Pipette

## Patentansprüche

1. System zur automatischen Durchführung von Reaktionen in Reaktionsgefäßen, enthaltend:
- jeweils mehrere Gefäße zur Durchführung einer Reaktion, zur Bevorratung von Reagenzien und zur Aufnahme von Proben,
- Einzelverschlüsse in Form eines Deckels für mehrere dieser Gefäße, welche einen in eine Öffnung dieser Gefäße hineinragenden Teil (550) aufweisen, wobei dieser in den Innenraum des Gefäßes hineinragende Teil eine konisch geformte Ausnehmung (551) aufweist,
- eine Vorrichtung zum automatischen Öffnen der Einzelverschlüsse, die ein Bauteil (700) aufweist, das in den Innenraum des Deckels eingreift und sich über die konisch geformte Ausnehmung (551) in dem Deckel festklemmt, und
eine automatische Pipettiereinrichtung.

2. System gemäß Anspruch 1, weiterhin enthaltend eine Einrichtung zur Regulierung der Temperatur von in den Reaktionsgefäßen enthaltenden Flüssigkeiten.

3. System gemäß einem der Ansprüche 1 oder 2, wobei die Vorrichtung zum automatischen Öffnen der Einzelverschlüsse weiterhin ein Bauteil (710) aufweist, mit dem der ergriffene Deckel von dem Bauteil (700) abgestreift werden kann.

4. Verfahren zur automatischen Durchführung chemischer Reaktionen oder chemischer Analysen, **gekennzeichnet durch** die Schritte
- Zur Verfügungstellen von Flüssigkeiten in Gefäßen,
- Verschluß der Gefäße **durch** Einzelverschlüsse in Form eines Deckels, welche eine in eine Öffnung der Gefäße hineinragenden Teil (550) aufweisen, wobei der hineinragende Teil eine konisch geformte Ausnehmung (551) aufweist,
- automatisches Öffnen der Einzelverschlüsse mittels einer Vorrichtung, die ein Bauteil (700) aufweist, das in den Innenraum des Deckels eingreift und sich über die konisch geformte Ausnehmung (551) in dem Deckel festklemmt und
- Entnahme oder Hinzufügen von Flüssigkeit, mittels einer Pipettiereinrichtung.

5. Verfahren gemäß Anspruch 4, weiterhin enthaltend einen Schritt, in dem ein automatischer Wiederverschluß der Gefäße durch einen Einzelverschluß erfolgt.

6. Vorrichtung zur Bearbeitung einer Flüssigkeit, die sich in einem verschlossenen oder verschließbaren Gefäß befindet, enthaltend
- eine Vorrichtung zum Pipettieren der Flüssigkeit und damit verbunden
- eine Vorrichtung zum Entfernen oder/ und Anbringen eines Verschlusses in Form eines Deckels, welche eine in eine Öffnung des Gefäßes hineinragenden Teil aufweist, wobei der hineinragende Teil (550) eine konisch geformte Ausnehmung (551) aufweist und wobei diese Vorrichtung ein Bauteil (700) aufweist, das in den Innenraum des Deckels eingreift und sich über die konisch geformte Ausnehmung (551) in dem Deckel festklemmt.

## Claims

1. System for automatically carrying out reactions in reaction vessels comprising:
- several vessels each for carrying out a reaction, for storing reagents and for holding samples,
- individual closures in the form of a cap for several of these vessels which have a portion (550) which extends into an opening of these vessels and this portion extending into the interior of the vessel has a conically shaped recess (551),
- a device for automatically opening the individual closures which has a component (700) which engages in the inner space of the cap and wedges in the cap by means of the conically shaped recess (551) and
- an automated pipetting device.

2. System as claimed in claim 1, additionally comprising a device for regulating the temperature of liquids contained in the reaction vessels.

3. System as claimed in one of the claims 1 or 2, wherein the device for automatically opening the individual closures has an additional component (710) which can be used to strip off the gripped cap from the component (700).

4. Process for automatically carrying out chemical reactions or chemical analyses, **characterized by** the steps
- providing liquids in vessels,
- closing the vessels by individual closures in the form of a cap which has a portion (550) which extends into an opening of these vessels and this portion extending into the interior of the vessel has a conically shaped recess (551),
- automatically opening the individual closures by means of a device which which has a component (700) which engages in the inner space of the cap and wedges in the cap by means of the conically shaped recess (551) and
- removing or adding liquid by means of a pipetting device.

5. Process as claimed in claim 4, additionally comprising a step in which the vessels are automatically reclosed by an individual closure.

6. Device for processing a liquid which is present in a closed or closable vessel, comprising
- a device for pipetting the liquid and linked thereto
- a device for removing or/and attaching a closure in the form of a cap which has a portion which extends into an opening of the vessel and this portion (550) extending into the interior of the vessel has a conically shaped recess (551) which has a component (700) which engages in the inner space of the cap and wedges in the cap by means of the conically shaped recess (551).

## Revendications

1. Système pour la réalisation automatique de réactions dans des récipients de réaction contenant :
- à chaque fois, plusieurs récipients pour réaliser une réaction, pour stocker des réactifs et pour recevoir des échantillons,
- des fermetures individuelles sous forme d'un couvercle pour plusieurs de ces récipients, lesquels présentent une portion (550) faisant saillie dans l'ouverture de ces récipients, cette portion faisant saillie à l'intérieur de ce récipient présentant un évidement (551) façonné en cône,
- un dispositif pour ouvrir automatiquement les fermetures individuelles, qui présente un composant (700) qui s'engage à l'intérieur du couvercle et se cale dans le couvercle par l'intermédiaire de l'évidement (551) façonné en cône, et
- une installation de pipetage automatique.

2. Système selon la revendication 1, comprenant de plus une installation pour réguler la température des liquides contenus dans les récipients de réaction.

3. Système selon les revendications 1 ou 2, dans lequel le dispositif pour ouvrir automatiquement les fermetures individuelles présente de plus un composant (710) avec lequel le couvercle saisi peut être retiré du composant (700).

4. Procédé pour réaliser automatiquement des réactions chimiques ou des analyses chimiques, **caractérisé par** les étapes consistant :
- à mettre à disposition des liquides dans des récipients,
- à fermer les récipients à l'aide de fermetures individuelles sous forme d'un couvercle, lesquelles présentent une portion (550) faisant saillie dans l'ouverture de ces récipients, la portion faisant saillie présentant un évidement (551) façonné en cône,
- à ouvrir automatiquement les fermetures individuelles au moyen d'un dispositif qui présente un composant (700) qui s'engage à l'intérieur du couvercle et se cale dans le couvercle par l'intermédiaire de l'évidement (551) façonné en cône, et
- à retirer ou introduire des liquides au moyen d'une installation de pipetage.

5. Procédé selon la revendication 4, contenant de plus une étape, dans laquelle une refermeture automatique des récipients se réalise à l'aide d'une fermeture individuelle.

6. Procédé pour traiter un liquide, qui se trouve dans un récipient fermé ou refermable, contenant
- une installation pour pipeter le liquide et associé à celui-ci
- une installation pour retirer ou/et poser une fermeture sous forme d'un couvercle, ladite installation présente une portion faisant saillie dans une ouverture du récipient, la portion (550) faisant saillie présentant un évidement (551) façonné en cône et cette installation présentant un composant (700) qui s'engage à l'intérieur du couvercle et se cale dans le couvercle par l'intermédiaire de l'évidement (551) façonné en cône.
